# EUROPEAN PATENT SPECIFICATION

(11) **EP 1 714 823 B1**
(45) Date of publication and mention of the grant of the patent: **08.07.2009**
(21) Application number: 06112593.6
(22) Date of filing: 13.04.2006
(51) Int. Cl.: B60K 35/00, B60K 37/06

(54) **Input device for agricultural vehicle information display**
Eingabegerät für die Anzeige eines landwirtschaftlichen Fahrzeuges
Dispositif d'entrée de données pour l'afficheur d'un véhicule agricole

(30) Priority: 20.04.2005 GB 0507928
(43) Date of publication of application: 25.10.2006
(73) Proprietor: CNH U.K. Ltd., Basildon Essex S14 3AD (GB)
(72) Inventor: Marcello, Mongiardo, 41100, Modena (IT); Rossi, Roberta, 41100, Modena (IT); Marzani, Stefano, 42019, Reggio Emilia (IT)
(74) Representative: CNH IP Department

(56) References cited:
- WO-A2-03/017304
- DE-A1- 10 207 872
- DE-C1- 4 341 834
- DE-U1- 20 014 425
- US-A- 6 041 868
- US-A1- 2004 199 309

## Description

The present invention relates to apparatus for displaying information to the driver of an agricultural vehicle. Though the invention may be applicable to combine harvesters and other agricultural machinery, its primary application is in tractors.

The driver of a tractor needs to monitor and control a wide variety of parameters relating to both the operation of the tractor itself and the operation of an implement attached to the tractor.

To monitor the operation of the tractor, it is known to provide a cab display (CD) screen which is connected through a proprietary communications bus to a dedicated computer which receives signals from different sensors that are mounted on the tractor. The driver can select to display on the screen the information that is relevant to the operation being performed at the time. For example, if operating a plough, the driver may wish to monitor the operation of the three point hitch and, when operating such ancillary equipment as a mechanical shovel, he may wish to monitor the settings of the hydraulic circuits powering the equipment.

To monitor the operation of an implement coupled to the tractor, on the other hand, it is known to provide in the cab of the tractor a separate virtual terminal (VT) display which communicates with the implement using a bus complying with industry standard ISO 11783. Using an industry standard bus to establish communication between the VT display and the computer mounted on board the implement, allows the same display to be used with implements from different manufacturers.

Aside from the cost of providing two separate screens for the cab display and the virtual terminal, the prior art has the disadvantage of requiring the driver to gather information separately from two screens and to use different keypads or control panels to select the information and set the control parameters displayed on the different screens.

In a copending European patent application, the Applicants have proposed an agricultural vehicle having a screen, a control panel associated with the screen and two data buses in operation using different protocols connected in common to the screen and to the control panel to permit the screen to communicate with two computers mounted on board the vehicle and an implement connected to the vehicle, respectively, so as to allow the screen to display selectively data relating to both the vehicle and the implement.

By enabling a single screen mounted in the cab to act both as a CD and VT display, the invention allows the driver of an agricultural vehicle to monitor and set parameters in both the tractor and the implement without having to switch between screens and control panels.

The ISO standard set down for the VT display requires the display to have so-called soft buttons along one side of the display screen. These buttons are used to select from various options displayed on the screen next to the button. The term "soft buttons" refers to the fact that the function served by a button at any time is determined by the software.

While the use of soft buttons is quite intuitive and used widely in computers generally, as shown in DE 4.341.834, it has the disadvantage of requiring the screen to be in easy reach of the operator and for the operator to move his selection finger from one button to another to make the appropriate selection. This may not be convenient for the driver of a tractor, especially when it is being driven over uneven terrain.

In WO-03017304, a continuously rotatable knob is described which is also axially depressible to select an item from a menu. The knob however is associated with an internally provided small screen only allowing to select a menu item which appears in a window of the knob while turning it. As the knob moreover is provided with stop positions, the available menu selections is limited to a predefined number.

With a view to mitigating the foregoing disadvantages, the present invention provides an agricultural vehicle having a screen provided with an array of soft buttons and connected to a computer programmed to display on the screen menu items selectable by operation of the soft buttons.

The vehicle is characterized in that :
- an additional input device is provided for selecting a menu item from those displayed on the screen, the input device comprising a continuously rotatable knob which is also axially depressible to select an item from a displayed menu, rotation of the knob serving to change the menu item that is selected upon depression of the knob;
- the computer mounted on board the vehicle is programmed to display on the screen a menu of items available for selection by the user using the input device, wherein the image displayed by the computer on the screen comprises a first array of icons, each icon in the first array being associated with a function relating to the operation of equipment mounted on board the vehicle, and a second array of icons adjacent the first array, each icon in the second array being associated with an item of ancillary equipment that may be coupled to the vehicle; the arrangement being such that, on reaching the end of either array, continued rotation of the knob seamlessly scrolls to the other array to make the menu item selection totally intuitive.

Though the standard for VT terminals requires soft buttons to be present, the invention allows the operator an alternative mode of selecting a menu item, namely by the use of a single knob which may be considered in this context as a unidirectional mouse the rotation of which moves a cursor and depression of which selects a menu item highlighted by the cursor. The ability to move a cursor and make a menu selection without removing one's hand from a control knob, simplifies the operator interface considerably and allows more freedom in the positioning of the screen as it need no longer be within easy reach of the operator.

As tractor operators are not of necessity familiar with the operation of computers, it is desirable to configure the display of menu items available for selection such that navigation through the menu system using a single rotatable control knob is entirely intuitive.

The number of icons associated with the on board equipment of the vehicle will be fixed and determined by the program of the on board computer. Selection of one of the icons from the first array will change the display to a sub-menu. For example, in the case of a tractor, sub-menus available for selection from the main menu may be associated with the control of the three point hitch, control of the electro-hydraulic remotes, the settings for head turning sequences etc. The selection of one of the icons from the second array will however turn the display into a VT terminal mode for the ancillary equipment connected to the tractor and, once such a selection has been made, the information displayed on the screen will be determined by the computer mounted on board the ancillary equipment.

As the number of pieces of ancillary equipment may vary, the ribbon of the second array may be larger than the screen and the rotatable knob may serve to scroll the icons to allow any number of VT terminal modes to be selected. On reaching the end of either array, continued rotation of the knob will move the cursor seamlessly to the other array. The circular movement of the cursor on the screen reflects the continuous rotation of the control knob, to make the menu item selection totally intuitive.

A problem that is encountered when navigating a complex hierarchical menu driven system is that an inexperienced user may find it difficult to return to a screen, not knowing the entire sequence of selection required to reach it.

To help mitigate this problem, it is proposed in a further aspect of the invention to provide on each menu displayed by the screen a set of icons graphically indicative of the menus that have to be displayed in sequence to arrive at the current menu. In this way, the user is provided with a graphical description of the position of each menu within the structure of the menu system.

Advantageously, the computer is programmed such that a prolonged depression of the rotary control knob serves as a signal to return to the next higher menu in the menu hierarchy.

The invention will now be described further, by way of example, with reference to the accompanying drawings, in which:
Figure 1 is a block diagram of an information display system in an agricultural tractor,
Figure 2 is a front view of a display unit showing the display screen and various control buttons arranged on the panel surrounding the screen,
Figure 3 shows the image only of the screen in Figure 2, and
Figures 4 to 59 show only the cab display part of the images displayed on the screen as a user navigates through the menu system.

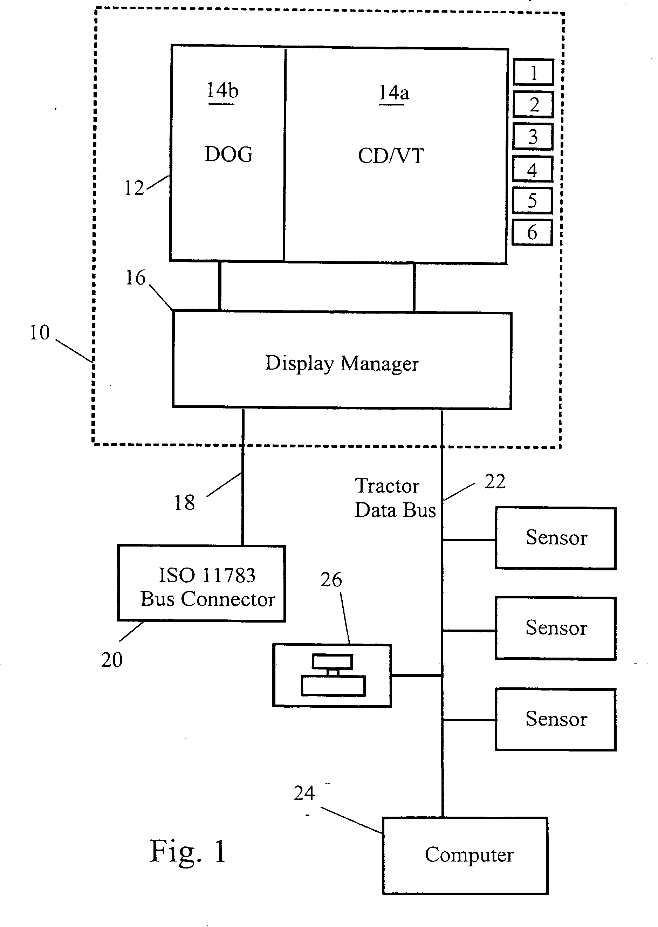

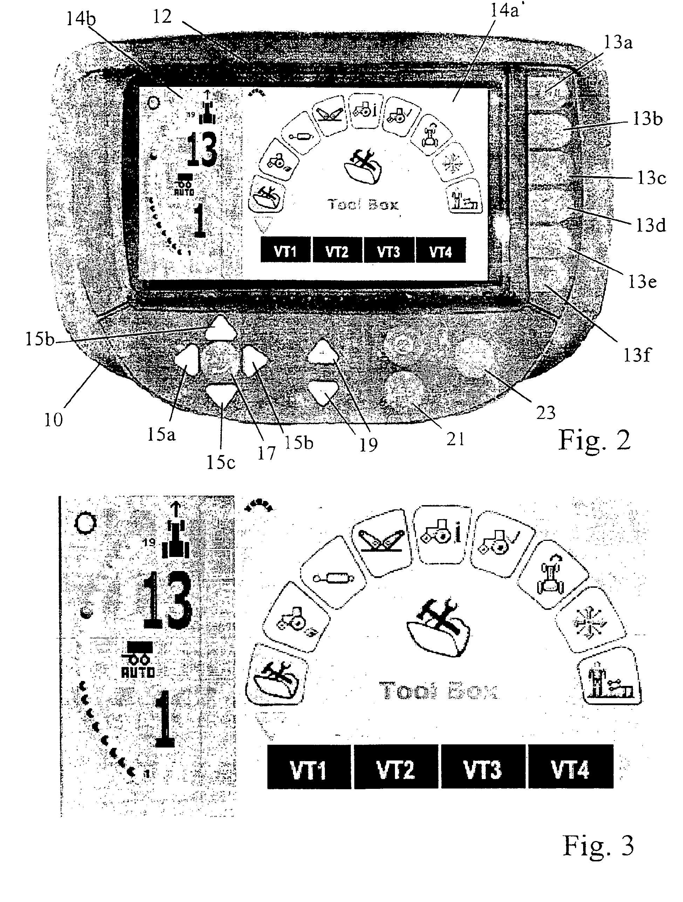

In Figure 1, a small wide colour display (SWCD) unit 10 incorporates a display screen 12 and a display manager 16. The outward appearance of the SWCD unit 10 is as shown in Figure 2, where is it seen to comprise a set of buttons arranged in the bezel surrounding the screen 12. The layout of these buttons is generally standard. The six buttons 13a to 13f numbered 1 to 6 arranged to the right of the screen are so-called soft switches whose function changes constantly under program control. In use, a menu item displayed on the screen alongside the relevant soft switch can be selected by depressing that switch. The buttons along the bottom of the screen are navigation and value setting buttons. In particular, they comprise four screen navigation buttons 15a to 15d (that move a cursor or a highlight around the screen) surrounding an Enter button 17, two UP/DOWN value setting buttons 19, and two menu navigation buttons 21 and 23. The button 21 is an Escape key to return to the next higher menu in the menu hierarchy and the button 23 is a Home key that directly returns to the top menu.

The screen image is divided into two areas 14a and 14b. The area 14b is used as a conventional display of gears (DOG). This includes an icon indicating the direction of travel, and the currently selected gears in both directions. It will be appreciated that a tractor need not always be started in first gear and the display is used to indicate to the operator the gear that will be selected when the driver changes from forward to reverse drive. As best seen from the screen image of Figure 3, the DOG also has two icons to indicate when the tractor is in automatic mode and in neutral. As the DOG is generally conventional, it is not necessary for it to be described in greater detail in the present context.

The remaining area of the screen image 14a is used in the present invention either as a cab display (CD) to display information relating to the operation of the tractor, as will be described in greater detail below, or as a virtual terminal (VT) for an item of ancillary equipment, such as a plough or a baler, that is hitched to the tractor. Hitherto, two separate display units were required, one to act as a CD and the other as a VT and, aside from the additional cost, this made it difficult and complicated for the driver, who had to keep his mind on two different screens each with its own set of controls. The illustrated embodiment of the present invention overcomes these disadvantages by providing a dual function unit that acts both as a CD and a VT.

Because items of ancillary equipment are not dedicated to any one tractor, their connection to a VT terminal has to conform to an industry standard if the terminal is to be operated with ancillary equipment made by different manufacturers. For this reason, VT terminals on tractors are normally designed to operate with an ISO 11783 bus 18 and a standard connector 20 is provided on the tractor for connecting the computer of the ancillary equipment. The tractor data bus 22 which is connected to the tractor computer 24 and the various sensors mounted on board the tractor need not, and usually does not, conform to ISO 11783. The CD is therefore designed to operate in conjunction with a different bus from the VT and it is the incompatibility between the buses 18 and 22 that necessitated a tractor conventionally to be equipped with two different display units.

The need for compatibility also places certain constraints on the design of a VT terminal as it must itself comply with industry standards that dictate the aspect ratio of the screen and stipulate that certain switches be present on the display unit. The illustrated display unit complies with all these standards for a VT while doubling as a CD.

In the illustrated embodiment, a display manager 16 connected to drive the screen 12 is connected to two buses and manages the data received over both buses under program control to display on the area 14a of the screen either the image which would normally be seen on a cab display or that which would normally be displayed on a virtual terminal.

Aside from the saving in hardware, this combination of the VT and CD in a single unit simplifies operation by allowing the driver using a single set of controls to switch between a CD and a VT without having to move his attention from one side of the cab to the other.

In the remaining figures of the accompanying drawings, the functionality provided by the cab display will be described in detail. These figures all show the screen images displayed only in the area 14a of the screen 12 under program control.

Though there are controls around the bezel of the display unit, as described previously, the preferred embodiment of the invention provides the user with an additional and simpler input device 26 that can be used as an alternative to the various buttons on the bezel surrounding the screen 12. The input device 26 comprises an infinitely rotatable knob connected to a shaft encoder. Rotation of the knob in some situations can be used for cursor navigation in place of the left and right or up and down navigation buttons 15a to 15d. In other situations, rotation of the knob is programmed to be equivalent to operation of the value setting buttons 17. In addition, the rotatable knob can be depressed in a manner analogous to the clicking of a mouse button. Under software control, different actions can be allocated to depression of the knob, depending on the length of time that it is maintained in a depressed state. It is preferred for a short depression (a few milliseconds) to be equivalent to actuation of the Enter button 17 and for a prolonged depression (1 - 2 seconds) to be used in lieu of the Escape key 21 to exit from a menu to the preceding menu in the hierarchy. If desired, a further prolonged depression of the knob (5 - 10 seconds) may be interpreted as a depression of the home key 23, to return the program to the top level menu.

Hence, all the navigation and value settings can be carried out by the operator using an input device comprising a single axially depressible rotary button. The operator need not therefore remove his hand from the control knob of the input device 26 and as he does not have to look to see what button he is depressing, his attention is not called away from the windscreen and the display unit.

The screen images when the display unit is operating in the CD mode are shown in more detail in Figures 3 to 59. The program that is run by the computer 24 and which creates the various screen images shown in the drawings, is essentially a menu driven program with menus of different hierarchy analogous to an organisation tree, with higher level menus displaying icons for the selection of lower level menus. The operator can use the input device 26 to navigate through all the various menus until reaching a particular parameter to be monitored, set or saved. Each screen is designed such that the cursor endlessly cycles from one selectable icon to the next as the rotary knob of the input device is turned clockwise and anti-clockwise. The cursor may be a pointer but it is simpler to show the position of the icon currently selected by highlighting it. This can be done in any suitable manner to distinguish the selected icon from the other available for selection.

The screen image shown in Figure 3 is the top level menu which is also referred to herein as the Parliament menu (capital letters are used herein when referring the names or displayed titles of the menus) on account of its resemblance to the layout of the seats in some parliament buildings. Along the bottom of the screen there is a straight ribbon of icons labelled VT1, VT2 to VTN. Only four such icons are visible on the screen at any one time but if the rotary knob of the input device is turned anticlockwise past VT4, the entire ribbon will move to the left to display icons VT2 to VT5 and VT5 will be selected. In this say, any number of VT's can be selected by turning the knob. Depression of the knob while a VT icon is highlighted will place the display unit under the control of the ancillary equipment connected to the terminal 20 whereupon the area 14b of the screen will continue to act as a DOG but the right hand side area 14a will act as a virtual terminal for the ancillary equipment.

By contrast, the icons arranged in the semi-circular arc are all concerned with the CD function of the display unit and these icons never move on the screen. When the knob of the input device is turned counter clockwise past the displayed Tool Box icon, the VT1 icon is highlighted and at the other end when the rotary knob is turned past the Profile icon, the VTN icon is highlighted. Thus the rotary knob allows the cursor to cycle seamlessly between the various CD functions, which are described further below, and the available VT terminals.

In the illustrated embodiment, the Parliament menu allows selection of nine different sub-menus associated with different aspects of tractor operation. Figures 3 to 11 show the effect on the screen of turning the rotary knob clockwise to select the different sub-menus that are available. As can be seen from these figures, when an icon is selected, not only does the icon become visually distinguishable from the others but also an enlarged image of the icon along with its function expressed in text is displayed in the centre of the screen. Icons are used in addition to the text to represent these various functions in order to make operation of the display as intuitive as possible to the tractor operator.

The nine different icons have the following functions, namely Tool Box, Performance, EHRs (AUX), Hitch Notebook, Trip Computer, Tractor Summary, HTS, Joystick and Profile. These will all be explained in further detail below.

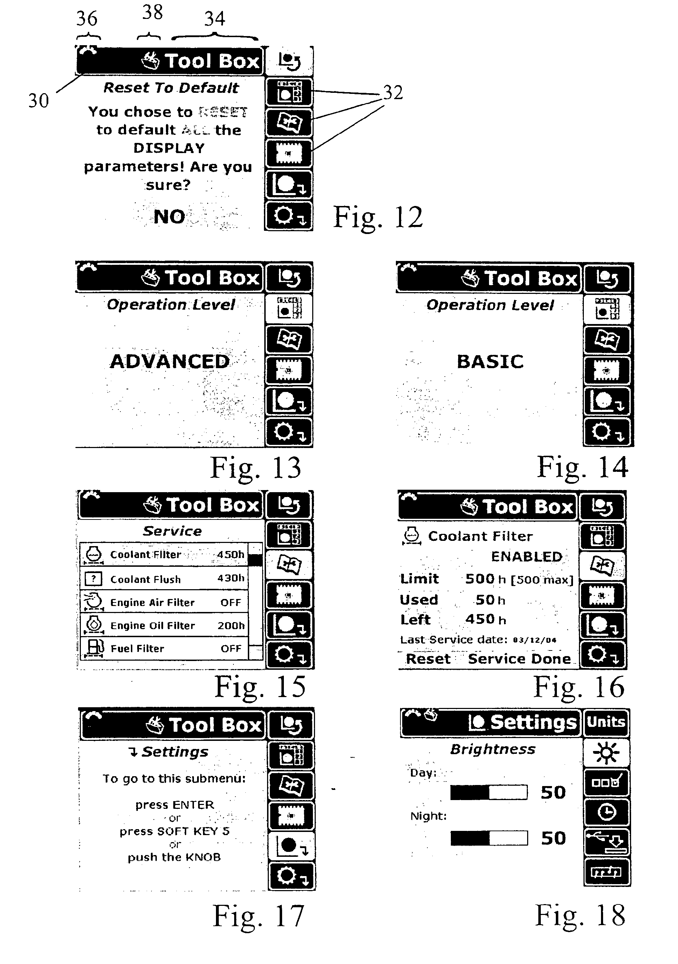

Figures 12 to 30 inclusive are all screens displaying menus and sub-menus of the Tool Box. Figure 12 shows the first screen that is displayed when the Tool Box is selected from the Parliament menu. All menu screens apart from the Parliament menu have the same general layout. In particular, across the top of the screen a title bar 30 is displayed in which the selected sub-menu item is displayed in text alongside its icon. Down the right hand side of the screen there are selectable icons which can be chosen either by depressing the rotary knob of the input device 26 while they are highlighted or by pressing on the button 13a to 13f alongside the icon. The main body of the screen displays information to the operator to allow parameters to be set, monitored and saved.

At the left hand side of the title bar, there is displayed a set of icons showing graphically all the menus and sub-menus that have to be selected in sequence to arrive at the currently displayed screen. In the case of Figures 12 to 17 only one such icon is required, because the Tool Box is a sub-menu of the parliament menu but in the case of Figure 18 two icons are needed because the Settings menu is itself an item selected from the Tool Box. These icons, also known as breadcrumbs, assist the operator by showing how the currently displayed menu can again be reached and which menu will be displayed if the Escape key is depressed to return to a higher level menu.

When the uppermost of the six selectable items displayed on the right hand side of the Tool Box menu is highlighted (see Figure 12) the operator is given the option to reset all parameters to the default values, or factory settings. Within this screen rotation of the control knob of the input device 26 cycles through YES and NO and depression of the knob then determines whether or not the system is reset.

The next item selectable from the Tool Box allows the operator to set the operation level which, as shown in Figures 13 and 14 can be set to an Advanced or a Basic level by rotation followed by depression of the control knob.

The third item in the Tool Box menu, shown in Figures 15 and 16 is a service menu which allows the user to monitor the condition of components such as the coolant, air, oil and fuel filters. For each component, as shown in Figure 16, the user can Enable or Disable the monitor, set the length of the service interval and determine when next a service operation is required such as flushing the coolant or cleaning or replacing a filter.

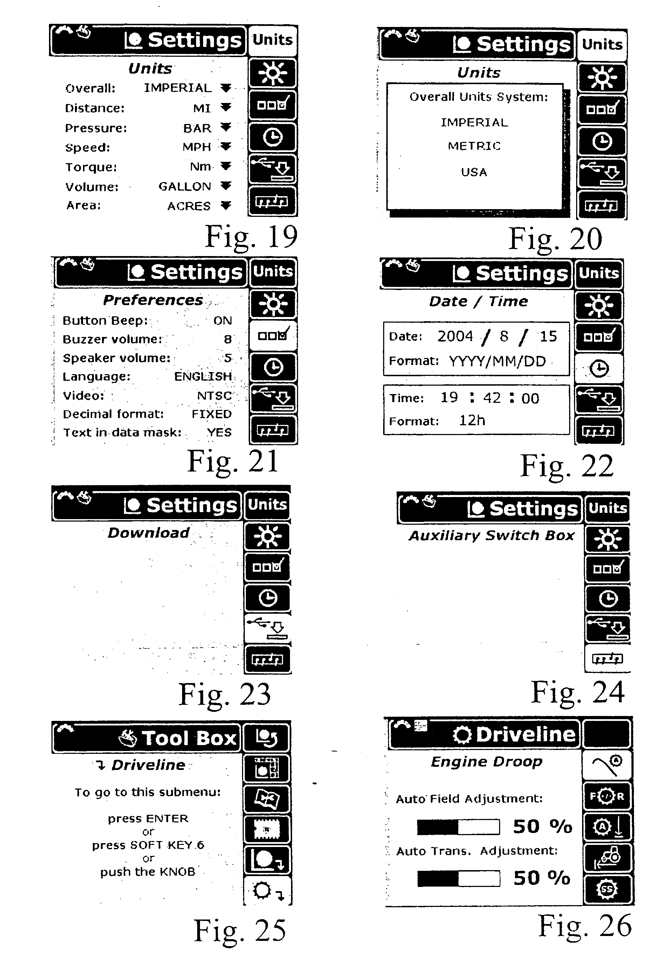

The next item in the Tool Box is a Settings sub-menu and the various parameters that can be set are shown in Figures 18 to 24. These parameters should be self-evident from the drawings. The top item in this sub-menu (see Figures 19 and 20) allows the user to inspect or change the measurement units. Thus the user can select between IMPERIAL or METRIC units, so that distance can be displayed in miles or kilometres, pressure in bars, psi or kilopascals, speed in mph or kph, torque in nm of ft.pound, volume in gallons or litres and area in acres or hectares.

The next item in the Settings menu (see Figure 18) allows the brightness of the display to be set. Different brightness levels can be set for day and night.

The third selectable item in the Settings menu (see Figure 21) allows the user to set whether or not a beep is produced when a button is depressed, to adjust the volume of the buzzer and the speaker, to select the language of the display, to select the television standard and decimal format and to set a data mask when entering text.

The fourth item on the Settings menu (see Figure 22) allows the operator to set the time and date and the last two items are to enable data and programs to be downloaded and to operate an auxiliary switch box.

The last of the items selectable from the Tool Box menu (see Figure 25) is a Driveline menu which allows the operator to set various controls of the driveline. The individual controls are shown in Figures 26 to 30, the first selectable item being the engine droop (see Figure 26). This setting determines the rate at which the engine output torque changes with engine speed. If the droop is set too high then the engine will hunt and if it is set too low then the engine will not respond quickly.

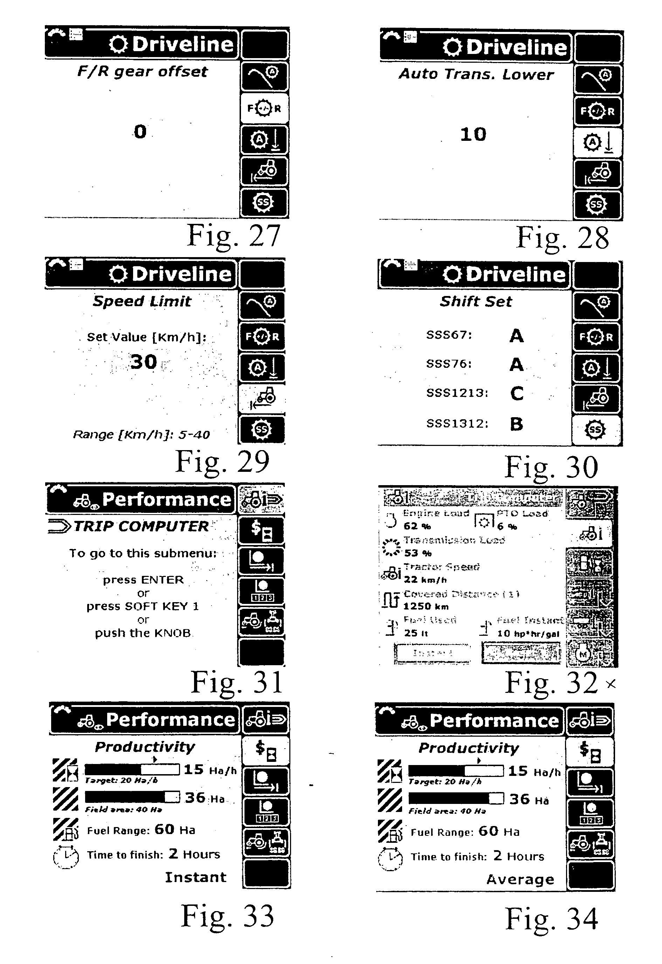

The next item (see Figure 27) in the Driveline menu is the forward/reverse speed offset. As earlier mentioned, a tractor is not always started in first gear and this setting determines the difference between the starting gears in forward and reverse. Thus the tractor may be set to start in fifth gear when moving forward but third gear when moving in reverse.

The third item in the Driveline menu (see Figure 28) allows the user to set the lowermost gear selectable when operating in automatic transmission.

The fourth item in the Driveline menu (see Figure 29) allows the user to set a maximum speed limit and the fifth (see Figure 30) allows the user to set the harshness level (A, B or C) during certain swap shifts, in particular between 6th and 7th gear and between the 12th and 13th gear.

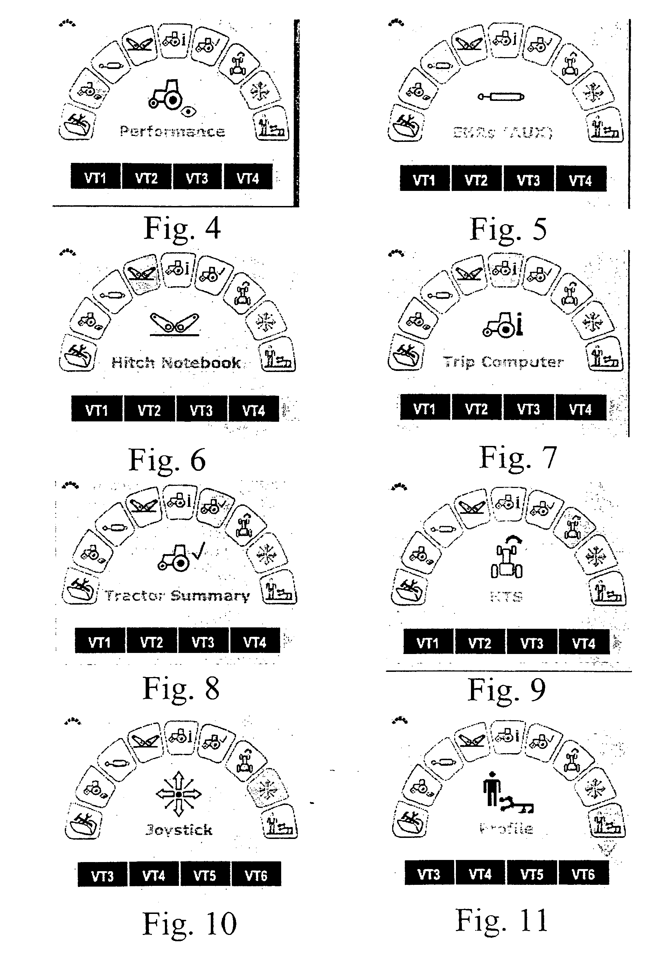

This completes the description of the Tool Box and the next item selectable from the Parliament menu is the Performance menu (see Figure 4).

The top item in the Performance menu has an icon which includes a paper-clip like right pointing arrow. This is to indicate that this is a navigation short-cut to another screen of the menu system, the Trip Computer (Figure 32) being a menu that can be reached directly from the Parliament menu (see Figure 7). The Trip Computer functions will be described further below.

The second item of the Performance menu (Figure 33) displays productivity. The screen displays the current and target values of certain parameters, such as area per hour or total field area covered and allows the user to change the target value for each of these parameters. The productivity screen also displays the remaining fuel range and the expected time to finish the set area.

As seen by comparing Figures 33 and 34, the user can also switch between instant and average values of the different parameters.

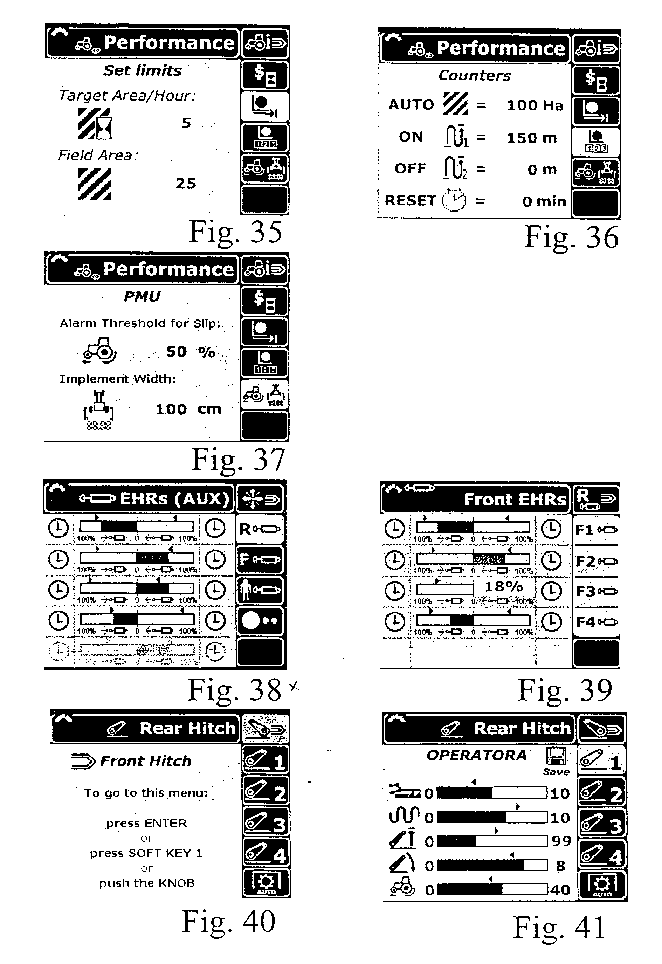

The target values can be set using the next item in the performance menu (see Figure 35). As the user rotates the control knob of the input device 26, a different parameter is selected on the screen and to alter the target value, the parameter is selected by depressing the control knob. After selection has taken place, rotation of the control knob will change the target value.

The fifth selectable item of the performance menu (see Figure 36) displays different counters and the last item (see Figure 37) allows the user to set an alarm threshold for slip and the implement width (required to calculate field area).

Returning once again to the Parliament menu, it will be seen that the next selectable icon (Figure 5) is concerned with the electro-hydraulic remotes (EHRs) and the menus accessible by selection of this icon are shown in Figures 38 and 39.

The top selectable icon in the EHRs menu is once again a short cut, as can be deduced from the paperclip shaped right pointing arrow in the icon. The short cut on this occasion is to the Joystick menu, itself selectable from the Parliament menu and described in greater detail below. The next two icons display the Front and Rear EHRs, respectively. Selection of any of these icons leads to a screen similar to that shown in Figure 39.

Within each of the Front EHRs and Rear EHRs screen the top icon is a short cut to the other. For each of the individual front and rear hydraulic remotes F1 to F4 and R1 to R4, the operator can see the current rate of fluid flow to or from the hydraulic remote displayed as a bar or thermometer-like reading. Above the bar of each hydraulic remote, two small arrows indicate maximum level for rate of flow in each direction. These can be individually set in the menu of Figure 39 in the same manner as described in relation to the Perfomance target settings.

The fourth selection available from the EHRs (AUX) menu is a user selection of the front and rear EHRs grouped together in one screen. This is to enable the operator to display only the EHRs that are of most interest to the task at hand.

The last selection from the EHRs (AUX) menu, represented by an icon comprising one large and two small circles, is used to set the EHR to be given the highest priority when there is not sufficient fluid to meet the demands of all the EHRs. The user can set the high priority EHR to be any one of R1 to R4 or F1 to F4, or else to NONE.

The next icon selectable from the Parliament menu is the Hitch Notebook (see Figure 6). This is to allow the operator to save a record of the current settings being used for each of the front and rear hitches. The operator may also be given the option to use values stored in the notebook to set the front and rear hitches.

The set of menus accessible from the Hitch Notebook relating to the Rear Hitch are shown in Figures 40 to 43, a similar set being also available for the Front Hitch.

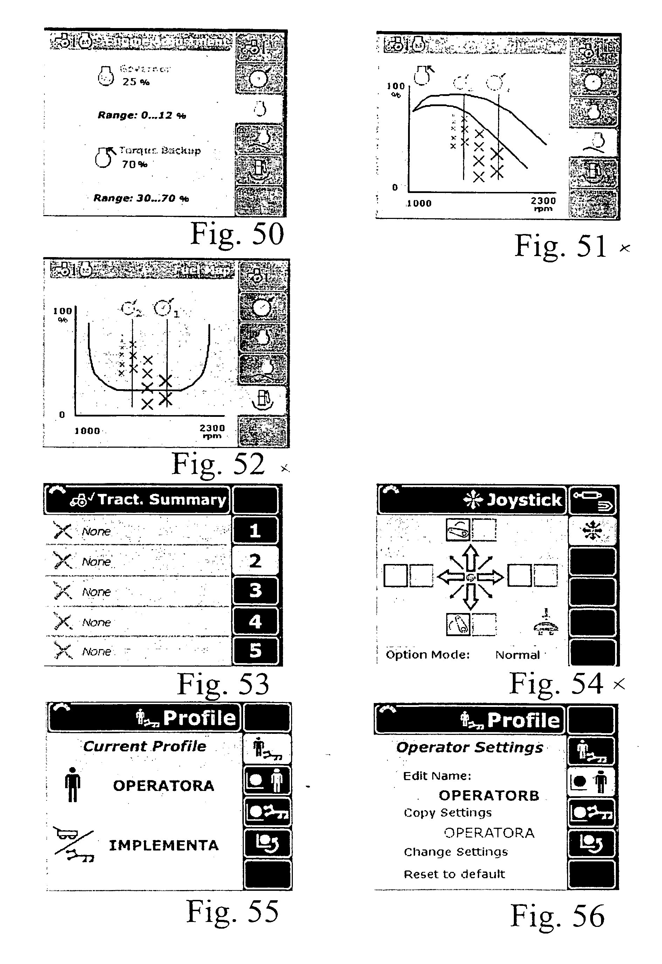

It will be noted that each notebook screen has as a heading OPERATORA, this being the name of the operator which is set using the Profile menu to be described below with reference to Figure 56. Each operator has his own notebook and when adding a new operator settings can be copied from an existing operator.

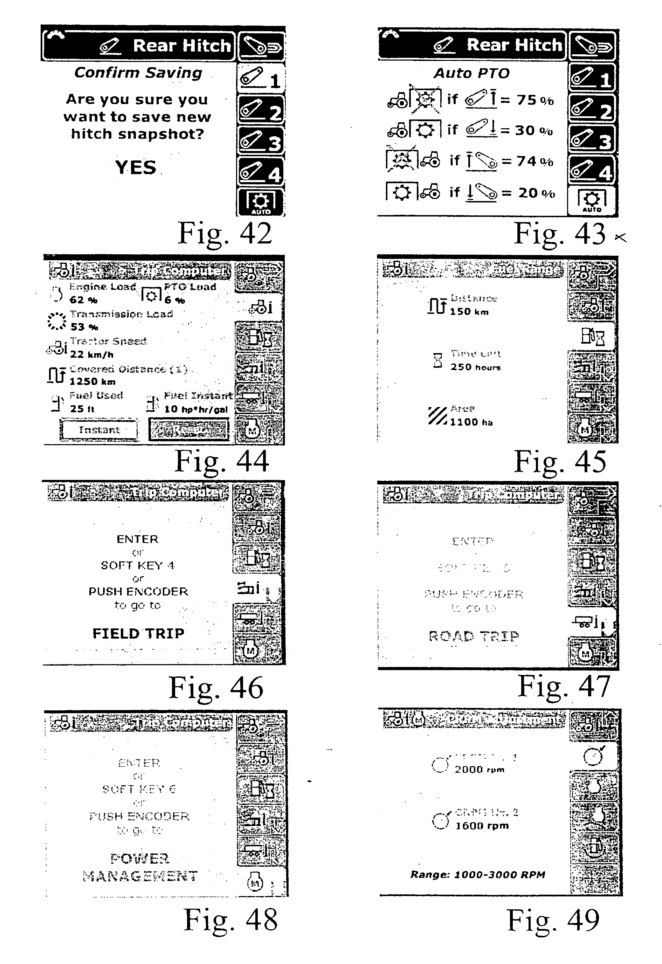

The first icon in each of the Front Hitch and Rear Hitch menus is a short cut to the other. All the remaining icons, when highlighted, display current values of parameters and targets associated with individual hitches, as shown in Figure 41 along with a Save icon. The parameters displayed are draft control, sensitivity control, maximum and minimum hitch height and slip control. Selection of any one of the hitches by depression of the rotary knob of the input device 26 (or by depression of the Enter button 17) while its icon is highlighted will bring up the menu shown in Figure 42 in which a further depression of the control knob is required to confirm the saving operation.

The last of the settings that can be modified in the Hitch Notebook are concerned with Auto PTO (see Figure 43) which enable and disable front and rear power take off depending on the front and rear hitch heights.

The values stored in the notebooks may additionally indicate the prevailing operating conditions and the use of notebooks is of course not restricted to front and rear hitches but is applicable to any other implement use in an agricultural vehicle.

The Trip Computer icon of the Parliament menu (see Figure 7) is used to access the screens shown in Figures 44 to 52 which provide information on the operation of the tractor. None of the Trip Computer screens can be used to enter data or settings into the computer, they are used purely to display data to the tractor operator.

The first selectable icon is a short cut to the previously described Performance menu. The second icon, as shown in Figure 44, displays the current engine load, PTO load, transmission load, tractor speed, covered distance, fuel used and current fuel usage rate.

The next selectable icon, shown in Figure 45, gives details of the fuel range, this being expressed in the number of miles, the number of hours and the area or land that can be covered with the remaining fuel.

The next two icons (Figures 46 and 47) displays information on the current field trip or road trip, as the case may be. Selection of one of these icons results in a display similar to that of Figure 44 but showing data only for the current trip. The data may include such items as the most currently selected gear, area of ground covered, total fuel used etc.

Selection of the Power Management icon of the Trip Computer menu (see Figure 48), allows the operator to select the screens shown in Figures 49 to 52.

In the CRPM Adjustment screen, the operator can select the constant engine speeds that are displayed in Figures 51 and 52.

In the Engine Adjustment screen of Figure 50, the operator can view the operation of the governor and the percentage of torque backup.

The Torque Map screen in Figure 51 displays maps of boosted and unboosted output torque against engine speed. On the same map, two lines are drawn to represent the selected constant RPM's (refer to Figure 49) and a set of crosses to indicate the point on the map at which the engine is operating. Also displayed are past operating points to provide a full history of the operation of the engine. Past operating points are represented by crosses that shrink, fade or change colour as they get older.

The Fuel Map of Figure 52 is a similar display to Figure 51 but this time showing the optimum fuel consumption at different engine speeds. This provides a visual indication to the operator of the current and past fuel efficiency of the engine.

The Tractor Summary (see Figure 53) allows the operator to customise the Cab Display by displaying on one screen the parameters that are most useful for the task in hand.

The HTS icon (Figure 9) of the Parliament menu is concerned with head turning sequences. HTS control is well known in itself and is a complex system that need not be described in detail in the present context. When ploughing a field, a set of tasks needs to be carried out in sequence when reaching the end of a row. For example, gears need to be changed, the speed reduced and the plough raised before a turn is commenced. During the turn, it may be necessary to alter the orientation of the shares of the plough and after the turn, it is necessary to lower the plough, change gears and pick up speed. The purpose of HTS control is to automate these tasks by first learning as the tasks are performed by the operator and then repeating the tasks in the same sequence when the operator indicates that a turn is approaching. The CD display during this time will indicate all the tasks to be performed and will highlight the task being performed to allow the operator to monitor the progress of the turn sequence.

Selection of the Joystick icon of the Parliament menu (Figure 10) displays the screen shown in Figure 54. This allows the operator to assign different functions to the movement and actuation of the joystick to suit the task in hand. Thus in some cases, the operator may wish to use the joystick to control the rear hitch while in others it may be used to control the front EHRs. It is possible, under program control, to provide further screens (not shown) to permit the setting not only of the functions controlled by movement of the joystick in the X and Y direction but also its sensitivity and the action performed by depression of the joystick or activating a button set into the head of the joystick. In such screen, the optional settings permitted by the program will be displayed as icons selectable in the same manner as previously described while controls such as sensitivity can be set by moving a pointer along a scale.

Selection of the Profile icon from the Parliament menu (Figure 11) allows the operator to access the screens shown in Figure 55 to 58. For each operator and each implement, it is possible to save the current settings of the various operating parameters for use on a later occasion. The purpose of the Profile menu is to allow the operator to save current settings or to restore the setting to factory defaults.

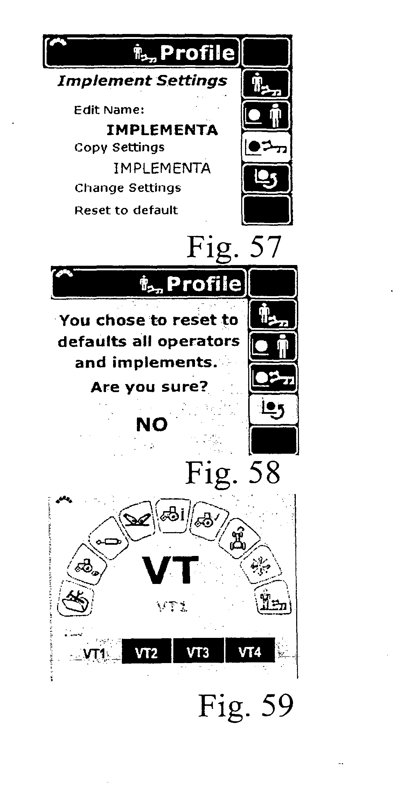

Selection of one of the VT icons (see Figure 59) changes the function of the display to a VT terminal for the selected piece of ancillary equipment and thereafter the information displayed will be specified by the equipment driving the VT display. The operator may however rapidly switch between the VT and CD displays using the same input device and while viewing the same screen, making the tractor and its ancillary equipment function as a single integrated unit despite the fact that they may have been produced by different manufacturers.

## Claims

1. An agricultural vehicle having a screen (12) provided with an array of soft buttons (13a-13f) and connected to a computer (24) programmed to display on the screen (12) menu items selectable by operation of the soft buttons (13a-13f), and
**characterized in that :**
- an additional input device (26) is provided for selecting a menu item from those displayed on the screen (12), the input device (26) comprising a continuously rotatable knob which is also axially depressible to select an item from a displayed menu, rotation of the knob serving to change the menu item that is selected upon depression of the knob;
- the computer (24) mounted on board the vehicle is programmed to display on the screen (12) a menu of items available for selection by the user using the input device (26), wherein the image displayed by the computer on the screen (12) comprises a first array of icons, each icon in the first array being associated with a function relating to the operation of equipment mounted on board the vehicle, and a second array of icons adjacent the first array, each icon in the second array being associated with an item of ancillary equipment that may be coupled to the vehicle; the arrangement being such that, on reaching the end of either array, continued rotation of the knob seamlessly scrolls to the other array.

2. An agricultural vehicle according to claim 1, **characterized in that** said first array of icons is arranged in an arc and said second array of icons is arranged in a ribbon.

3. An agricultural vehicle according to claim 2, **characterized in that** there is additionally provided on each menu displayed by the screen a set of icons graphically indicative of the menus that have to be displayed in sequence to arrive at the current menu.

## Patentansprüche

1. Landwirtschaftliches Fahrzeug mit einem Bildschirm (12), der mit einer Anordnung von programmierbaren Tasten (13a - 3f) versehen und mit einem Computer (24) verbunden ist, der zur Anzeige von Menüpunkten auf dem Bildschirm (12) programmiert ist, die durch eine Betätigung der programmierbaren Tasten (13a -13f) auswählbar sind, und
**dadurch gekennzeichnet, dass:**
- eine zusätzliche Eingabevorrichtung (26) zur Auswahl eines Menüpunktes aus denjenigen Menupunkten vorgesehen ist, die auf dem Bildschirm (12) angezeigt sind, wobei die Eingabevorrichtung (26) einen kontinuierlich drehbaren Knopf umfasst, der außerdem axial niederdrückbar ist, um einen Menüpunkt von einem angezeigten Menü auszuwählen, wobei eine Drehung des Knopfes zur Änderung des Menüpunktes dient, der beim Niederdrücken des Knopfes ausgewählt wird;
- der an Bord des Fahrzeuges eingebaute Computer (24) so programmiert ist, dass er auf dem Bildschirm (12) ein Menü von Menüpunkten anzeigt, die zur Auswahl durch den Benutzer unter Verwendung der Eingabevorrichtung (26) verfügbar sind, wobei das von dem Computer auf dem Bildschirm (12) angezeigte Bild eine erste Gruppe von Piktogrammen, wobei jedes Piktogramm in der ersten Gruppe einer Funktion zugeordnet ist, die auf den Betrieb einer an Bord des Fahrzeuges befestigten Ausrüstung bezogen ist, und eine zweite Gruppe von Piktogrammen benachbart zu der ersten Gruppe umfasst, wobei jedes Piktogramm in der zweiten Gruppe einem Posten einer Zubehör-Ausrüstung zugeordnet ist, die mit dem Fahrzeug koppelbar ist; wobei die Anordnung derart ist, dass beim Erreichen des Endes jeder Gruppe eine fortgesetzte Drehung des Knopfes nahtlos zu der anderen Gruppe weiterrollt.

2. Landwirtschaftliches Fahrzeug nach Anspruch 1, **dadurch gekennzeichnet, dass** die erste Gruppe von Piktogrammen auf einem Bogen angeordnet ist, und die zweite Gruppe von Piktogrammen auf einem Band angeordnet ist.

3. Landwirtschaftliches Fahrzeug nach Anspruch 2, **dadurch gekennzeichnet, dass** zusätzlich auf jedem von dem Bildschirm angezeigten Menü ein Satz von Piktogrammen vorgesehen ist, die graphisch die Menüs anzeigen, die in einer Folge angezeigt werden müssen, um das derzeitige Menü zu erreichen.

## Revendications

1. Véhicule agricole comportant un écran (12) pourvu d'une série de boutons soft (13a-13f) et connecté à un ordinateur (24) programmé pour afficher sur l'écran (12) des articles de menu sélectionnables par actionnement des bouton soft (13a-13f), et
**caractérisé en ce que :**
- un dispositif d'entrée supplémentaire (26) est prévu pour sélectionner un article de menu parmi ceux affichés sur l'écran (12), le dispositif d'entrée (26) comprenant un bouton rotatif sans interruption pouvant aussi être enfoncé axialement pour sélectionner un article d'un menu affiché, la rotation du bouton servant à changer l'article du menu qui est sélectionné par appui sur le bouton,
- l'ordinateur (24) embarqué à bord du véhicule est programmé pour afficher sur l'écran (12) un menu d'articles disponibles pour une sélection par l'utilisateur en utilisant le dispositif d'entrée (26), dans lequel l'image affichée par l'ordinateur sur l'écran (12) comprend une première série d'icônes, chaque icône dans la première série étant associée à une fonction se rapportant au fonctionnement d'un équipement embarqué à bord du véhicule, et une seconde série d'icônes adjacente à la première série, chaque icône dans la seconde série étant associé à un élément d'équipement annexe qui peut être couplé au véhicule, l'agencement étant tel qu'en atteignant la fin de n'importe quelle série, continuer la rotation du bouton fait défiler en douceur le pointeur jusqu'à l'autre série.

2. Véhicule agricole selon la revendication 1, **caractérisé en ce que** la première série d'icônes est disposée en forme d'arc et la seconde série d'icônes est disposée en forme de ruban.

3. Véhicule agricole selon la revendication 2, **caractérisé en ce qu'**il est prévu en plus sur chaque menu affiché par l'écran un jeu d'icônes montrant graphiquement les menus qui doivent être affichés en ordre pour atteindre le menu en cours.
